# EUROPEAN PATENT APPLICATION

(11) **EP 1 635 287 A1**
(43) Date of publication of application: **15.03.2006**
(21) Application number: 05018829.1
(22) Date of filing: 30.08.2005
(51) Int. Cl.: G06Q 10/00

(54) **Program customization means for commercial applications in handheld devices**

(30) Priority: 10.09.2004 US 939046
(71) Applicant: SAP AG, 69190 Walldorf (DE)
(72) Inventor: Kraft, Andreas, 68239 Mannheim (DE); Le Blay, Jean-Francois, Montreal H2H 1Y2 Quebeck (CA); Rheault, Genevieve, Montreal H2J 3W6 Quebec (CA); Fecteau, Martin, Boucherville J4B 8N6 Quebec (CA)
(74) Representative: Müller-Boré & Partner Patentanwälte

(57) **Abstract**

The present invention provides a method and system for giving users of various handheld devices access to mobile sales software online. The functionality accessed by users is provided by individual development components (DCs). Use of individual development components allows users to turn off certain components and also customize components without impacting other aspects of the software. Thus, software is tailored to a particular customer and is efficiently presented for that customer's use. This may be particularly useful for handheld devices because of the limited capability to display information and also the costs of downloading information to the handheld device. The user interface layer is on top of these functional components and can be rendered online allowing customized access to various handheld devices. Access to customer relationship management (CRM) applications and reports from the field may be extremely useful. Handheld users may be informed of the latest status of sales activities and may provide real-time information to the system that track these activities without having to wait until the user has access to a laptop computer. The use of DCs also improves the flexibility of the software because one DC can be modified without changing the code of the other DCs.

## Description

### BACKGROUND

Information and computer technology comprises an essential component for modern business operations. The utility of computer technology has been enhanced by the coupling of computers with information networks such as the Internet and World Wide Web ("WWW"). Successful business operations in the global marketplace require a synergetic relationship between local and distributed operations. For example, localized operations may include research and development, inventory management, customer service, strategic planning, etc. Distributed operations are conducted, for example, by sales personnel in the field who interact with customers and perform such tasks as order generation, customer relations, customer support, etc. Field personnel use mobile devices such as laptop computers for customer information, intake of customer orders, communication with one or more centralized databases at the home office, etc. Field personnel demand accurate and timely information regarding the state of business operation in order to effectively perform their jobs. For example, sales personnel typically require up to the minute information regarding current inventory levels, product availability and customer data. Conversely, the enterprise can operate more effectively through centralized management of information regarding the operations of field personnel and information collected in the field. However, use of handheld devices may pose certain logistical problems. The displays on these devices may be small and it may be costly to download information to the device. Additionally, many types of handheld devices exist, which may each have different user interface requirements.

### BRIEF DESCRIPTION OF THE DRAWINGS

FIG. 1 illustrates components of mobile sales online manager according to one embodiment of the invention.

FIG. 2 depicts a mobile sales online manager configuration environment according to one embodiment of the invention.

FIG. 3 depicts an online rendering engine environment according to one embodiment of the invention.

FIG. 4 illustrates the operation of a mobile sales online manager according to one embodiment of the invention.

FIG. 5 depicts a web application server environment according to one embodiment of the invention.

FIG. 6 shows a structure of a web- application server according to one embodiment of the invention.

### DETAILED DESCRIPTION

The present invention provides a method and system for giving users of various handheld devices access to mobile sales software online. The functionality accessed by users is provided by individual development components (DCs). Use of individual development components allows users to turn off certain components and also customize components without impacting other aspects of the software. Thus, software is tailored to a particular customer and is efficiently presented for that customer's use. This may be particularly useful for handheld devices because of the limited capability to display information and also the costs of downloading information to the handheld device. The user interface layer is on top of these functional components and can be rendered online allowing customized access to various handheld devices. Access to customer relationship management (CRM) applications and reports from the field may be extremely useful. Handheld users may be informed of the latest status of sales activities and may provide real-time information to the system that track these activities without having to wait until the user has access to a laptop computer. The use of DCs also improves the flexibility of the software because one DC can be modified without changing the code of the other DCs.

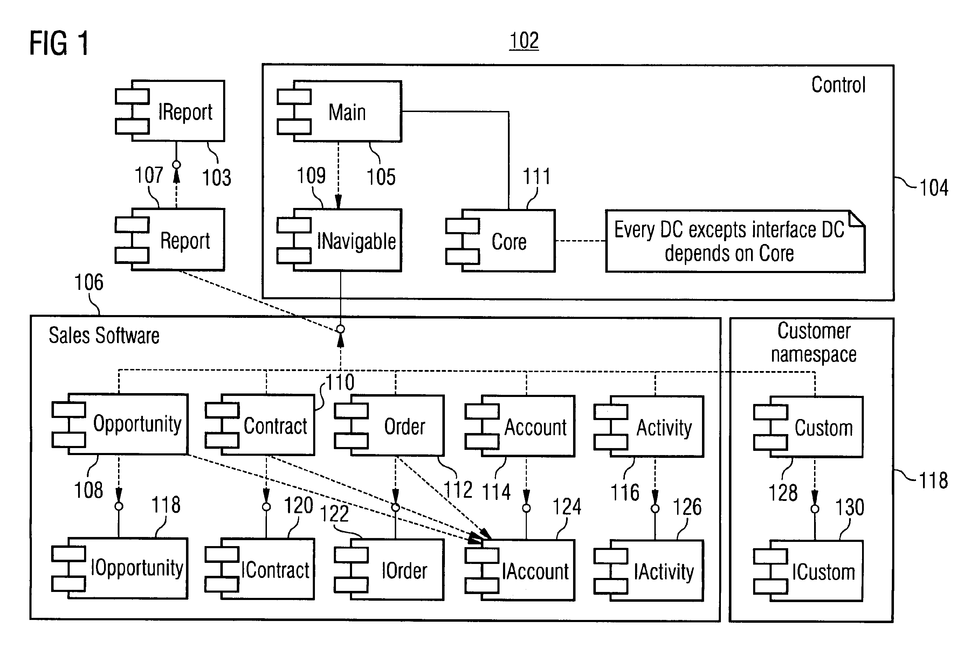

Figure 1 illustrates components of mobile sales online manager 102 according to one embodiment of the invention. Mobile sales online manager 102 may be comprised of multiple Web Dynpro DCs. A DC may contain one or more Web Dynpro DCs or DC interfaces. DCs that represent only an interface may be designated with a name beginning with a capital "I" followed by the name of the functionality provided. Interface DCs may be empty shells with a code body from which other classes may inherit the interface and may not contain any implementation or working code.

Mobile sales online manager 102 comprises control 104, sales software 106, customer namespace 118, as well as reporting DCs. Control 104 directs the operation of mobile sales online manager 102. Sales software 106 includes functional DCs that provide automated functions to manage sales and provide customer relationship management (CRM) functions to users. Customer namespace 118 is a component that allows a user to customize its own DCs that will operate as functional DCs.

Control 104 directs the operation of other DCs of mobile sales online manager 102 by providing navigation between DCs, as well as by providing other functions. Control 104 comprises Main DC 105, INavigable DC 109 and Core DC 111. Main DC 105 may provide a main menu and a proxy view responsible for handling communications between development components. Main DC 105 may be altered by a user to accommodate various business requirements because INavigable DC 109 defines a way to communicate and navigate between DCs. Main DC 105 may depend on core DC 111 to determine which functional DCs and user-customized DCs are available. Core DC 111 may deliver common services to other DCs, retrieve customizing data from CRM backend configuration databases, provide application configuration settings and offer utility services such as naming services.

Report 107 and IReport 103 provide CRM analysis and reporting by for example providing data mining to CRM applications. Report 107 may be customized to analyze, report on and predict customer behavior. The reports may be in any user-friendly format including table or chart format or in the form of pictures. For minimizing the transmission of data to the handheld device, some reports may be displayed partially but will offer the user the option to display the rest of the report or the stop the data transfer.

Sales software 106 may be used by businesses to keep track of orders and contracts, as well as other activities and account information. Sales software 106 may be provide CRM functions, which may include marketing planning, campaign management, customer segmentation, other marketing analysis, sales planning and forecasting, sales organizational and territory management, account and contact management or other sales support or analysis.

Sales software 106 may comprise Opportunity DC 108, Contract DC 110, Order DC 112, Account DC 114 and Activity DC 116, as well as corresponding interface DCs. Interface DCs may include IOpportunity DC 118, IContract DC 120, IOrder DC 122, IAccount DC 124 and IActivity DC 126. Interfaces may be used to provide a framework for how processing should be performed. The functional components Opportunity DC 108, Contract DC 110, Order DC 112, Account DC 114 and Activity DC 116 provide the content and affect the way that data is presented. Each functional component and corresponding interface work together using object-oriented programming techniques to provide the sales functionality particular to that component. Functional DCs may implement corresponding interface DCs, as well as the INavigable DC 109, to perform functions requested by a user. For example, Activity DC 116 implements INavigable DC 109 and IActivity DC 126 to administer communications.

Opportunity DC 108 and IOpportunity DC 118 may be used to track opportunities. An opportunity is a recognized possibility for an enterprise, for example, for sales of products or services. It may describe the customers (sales prospects), the requested products and services, the potential sales volume and an estimated sales probability. Using mobile sales online manager 102, a user can display important information about opportunities. For example, a Sales Manager on the road may use mobile sales online manager 102 to learn more about the details of an opportunity that he hears about from a team member. Mobile sales online manager 102 will retrieve these details using opportunity DC 108 and IOpportunity DC 118. A user may search for opportunities, list opportunities and view the details of opportunities using opportunity DC 108 and IOpportunity DC 118. For example, a user may search by the identifier and obtain a description, priority, status and due date of an opportunity.

Contract DC 110 and IContract DC 120 may be used to track contracts. A sales contract may describe an agreement between a vendor and client regarding a product purchase. A contract may specify the terms of product purchases over a period of time. Contract DC 110 and IContract DC 120 may administer contracts by allowing clients to buy products online pursuant to the contract and/or discuss general details about delivery. For example, Contract DC 110 and IContract DC 120 may be used by a customer to issue a sales order pursuant to a sales contract to specify particular delivery dates and agreements. Contract DC 110 and IContract DC 120 may include search, list and view details functions to, for example, retrieve and view details for a sales contract.

For example, a Sales Manager on the road who needs to know which contracts are currently active and running with his customer may use Contract DC 110 and IContract DC 120. A search may be performed by entering a client's last name and setting the status field to "open". Then, a Sales Manager may browse a results list and chose a contract that he or she wishes to know more about by selecting the sales contract identifier link. Finally, the Sales Manager may see critical information about the sales contract such as the client's name, the contract validity period and volume and other important details. Contract DC 110 and IContract DC 120 may also be used to provide details about one contract. To obtain information about a contract, a sales manager may enter the sales contract identifier and perform a search. The sales manager then selects the contract within the results list and looks at the details of the contract such as the validity period and the sales representative responsible of this contract. Contract DC 110 and IContract DC 120 may also be used to keep notes about a contract.

Order DC 112 and IOrder DC 122 may be used to administer sales orders and provide information about a sales order. A client may use Order DC 112 and IOrder DC 122 to issue a sales order to buy products at certain price or to request delivery at a specific time. Order DC 112 and IOrder DC 122 provide search, list and view details capabilities that may be used to retrieve information and details about a sales order. For example, a sales manager may use Order DC 112 and IOrder DC 122 to obtain the latest information about a sales order situation of a customer including the status, delivery date, issuer or other important details about the sales order. The Sales Manager may also select a client's last name to access the client account details view. Additionally Order DC 112 and IOrder DC 122 may be used to provide a global view of a customer's sales order.

Account DC 114 and IAccount DC 124 may be used to administer transactions related to a business partner. An account can be a person, a group or an organization. Account DC 114 and IAccount DC 124 may provide search, list, view details, update, and create functions that allow a user to administer account transactions. Account DC 114 and IAccount DC 124 may be used to retrieve information about an account, to create a new account or to contact a person and to update information about an account. For example, if a Sales Manager requires the latest information about an account before meeting a customer, Account DC 114 and IAccount DC 124 may be used to retrieve this information. A search may be performed by entering an account number and a first name. Then by selecting the account and the name from the search results list, the telephone number and other information about the account are displayed. Additionally, a new entry may be added, for example, to include new customers, or information may be updated by searching for and updating old information.

Activity DC 116 and IActivity DC 126 may be used to administer communication transactions, for example telephone calls, customer visits, general preparatory tasks, or private reminders. Activity DC 116 and IActivity DC 126 provide search, list, view details, update, and create functions that allow a user to administer communication transactions. For example, a manager may use Activity DC 116 and IActivity DC 126 to view his or her own activities as well as activities created by the team, in order to gather information about any previous forms of contact with business partners. A Sales Manager may use Activity DC 116 and IActivity DC 126 to verify weekly activities to see when and where an important customer meeting is taken place. Activity DC 116 and IActivity DC 126 may also be used to reflect that a meeting took place and to create a follow-up activity for the next appointment by entering the appointment description, date, time and customer name. This "follow-up" action (or button) would be available from the account detail screen. If later the meeting is postponed, the update activity functionality within activity management 118 may be used to reflect the postponement.

Custom 118 and ICustom DC 130 may be used by a customer to create or modify a DC. A customer may build or modify a new DC and deploy it in mobile sales online manager 102. To add a new DC, a user will build the new DC, add a corresponding interface DC and link it to the DC, and add a link to the INavigable DC 109 using object-oriented programming techniques. The user will then deploy the new DC and corresponding interface into the mobile sales online manager 102. Additionally, functionality of a DC can be changed by making modifications to an existing DC and then deploying the modified DC into the mobile sales online manager 102. Custom 118 and ICustom DC 130 may also be used to define other aspects of mobile sales online manager 102.

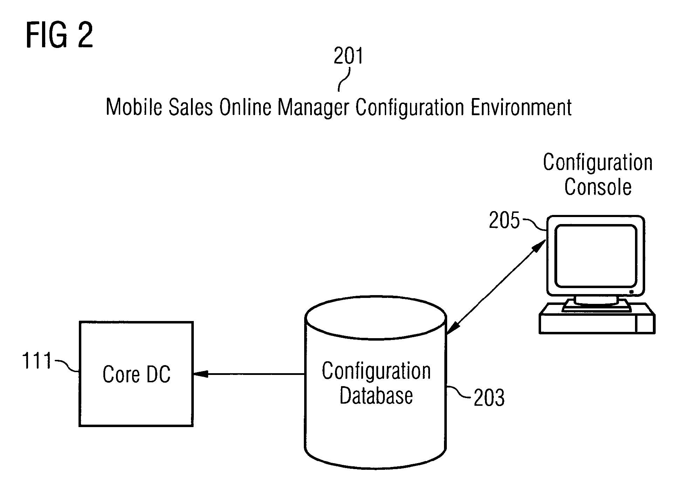

Figure 2 depicts a mobile sales online manager configuration environment according to one embodiment of the invention. Mobile sales online manager configuration environment 201 comprises a configuration database 203 that is connected to a configuration console 205 to receive selections from an administrator. Configuration database 203 is also connected to Core DC 111 so that Core DC 111 can retrieve the configurations that reflect the administrator's selections and transfer these configurations to other DCs of mobile sales online manager 102.

An administrator may provide selections that are used to set-up configurations that directly control how data is displayed. Each configuration may provide customer-specific settings that can be used by mobile sales online manager 102 to display data. For example, an administrator may use configuration console 205 to specify a number of records to send back in a results list. This may be used to ensure that the system does not download too much data over the wireless network so that the client is not charged excess costs. This may also be useful to prevent users of handheld devices from receiving more information than can be viewed. Configuration console 205 may be used to customize user interfaces allowing customers to chose, for example, what fields to display. Since customers can decide which fields to display, screen graphical elements may not be declared at design time. Navigation buttons and screen title may be declared and placed on a content pane at design time. However, configuration console 205 may be used to create other graphical elements, such as fields, tables and check boxes. Each view of a user interface may have a hook method that is called before the view is displayed. This method may be used to create and initialize dynamic user interface elements. The graphical features created by configuration console 205 may be stored as configurations in configuration database 203 so that they can be accessed via Core DC 111. These configurations of customer-specific settings can be stored on any machine-readable medium including an external database or a database residing on web application server 302.

Core DC 111 may be used to make available to the functional DCs the required user interface configuration data through context mapping. The context may contain identifiers and sequence numbers of the fields to display depending on the role of the current user. Fields may be mapped to a view controller context. A context may be declared at design time and may be adaptive so that it can be easily modified. Check box values may also be taken from the view context, which may be mapped to a context to display only the required check boxes.

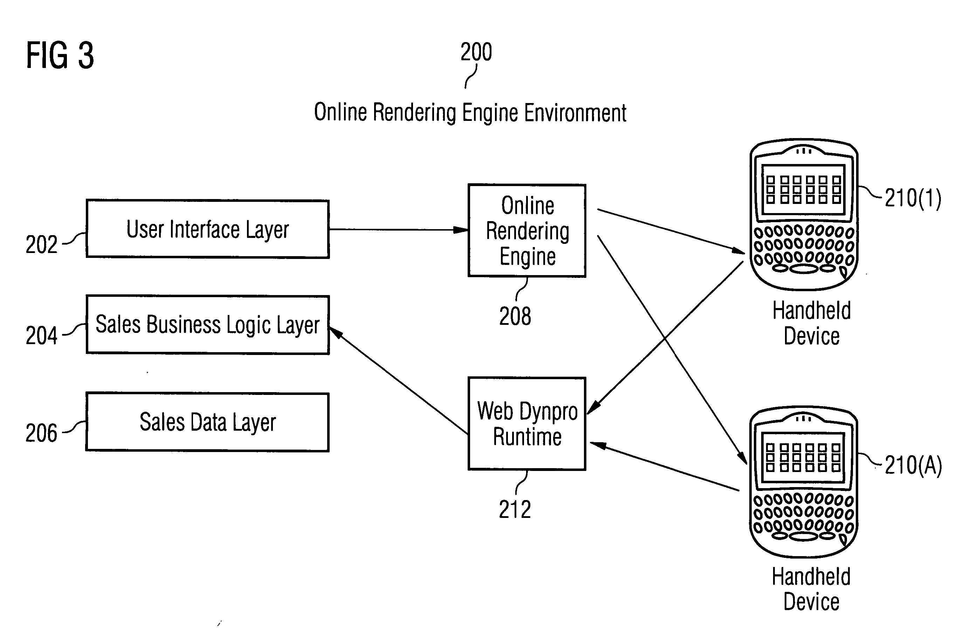

Figure 3 depicts an online rendering engine environment 200 according to one embodiment of the invention. Online rendering engine 208 renders user interfaces that are specific to the type of handheld device 212 that is accessing mobile sales online manager 102. Users of various handheld devices 210(1) - 210(A) may each access a common mobile sales online manager 102 because online rendering engine 208 translates information exchanged between mobile sales manager 102 and each of handheld devices 210(1) - 210(A) to directly control how data is displayed on handheld device 212. Online rendering engine 208 may perform this translation using, for example, a table look-up. Online rendering engine 208 is connected to user interface layer 202 and the handheld devices 210(1)-210(A).

Handheld devices 210(1) - 210(A) may be any portable computer, which may be designed to act as an organizer, note taker and/or communication device. These devices may have a small physical size and may possess compact user interfaces such as touch screens, hand writing recognition, or miniature keyboards. Handheld devices 210(1) - 210(A) may be of different types, each type having different software and/or hardware used to display information to a user. According to an embodiment of the invention, handheld devices 210(1) - 210(A) are personal data assistants such as those manufactured by Sony, Hewlett-Packard, and Research in Motion (RIM) e.g., Blackberry. Personal data assistants such as those manufactured by Sony may be different types of devices that those manufactured by, for example, RIM.

User interface layer 202 may be of a framework that is defined for implementing communication protocols in layers. Control may be passed from one layer to the next, starting at the top layer and proceeding to the bottom layer and back up the hierarchy. For example, user interface layer 202 may be defined to reside on top of sales business logic layer 204. Sales business logic layer 204 may reside on top of and sales data layer 206. Control may be passed from user interface layer 202 to sales business logic layer 204 and then to sales data layer 206. Control may then be passed back up the hierarchy.

User interface layer 202 may comprise the combination of menus, screen design, keyboard commands, command language and online help, which creates the way a user interacts with a computer. User interface layer 202 may pass control to sales business logic layer 204 to process business data entry, update, query or report on business data. Figure 1 illustrates exemplary components residing in sales business logic layer 204. Sales business logic layer 204 may pass control to sales data layer 206 to retrieve data needed for processing. After data is retrieved control may return to sales business logic layer 204 that may process the data and return control to user interface layer 202 to display this information to a user.

Online rendering engine 208 may be used by various handheld devices 210(1) - 210(A) to access user interface layer 202 without handheld-specific functionality within sales business logic layer 204. Online rendering engine 208 may comprise various look-up tables, each corresponding to a particular browser identifier transmitted by handheld device 210. This browser identifier can then be used to retrieve values from the look-up table corresponding to the type of handheld device 210 used. This allows sales business logic layer 204 to remain independent of the user interfaces so that it can be flexibly used with many types of handheld devices.

Online rendering engine environment 200 may also comprise Web Dynpro run-time engine 212 that is connected to handheld devices 210(1) -210(A) and sales business logic layer 204. Web Dynpro run-time engine 212 may by a framework that provides session information indicating, for example, which users are logged in, and also provides other user information. Web Dynpro run-time engine 212 may also provide access to other web services.

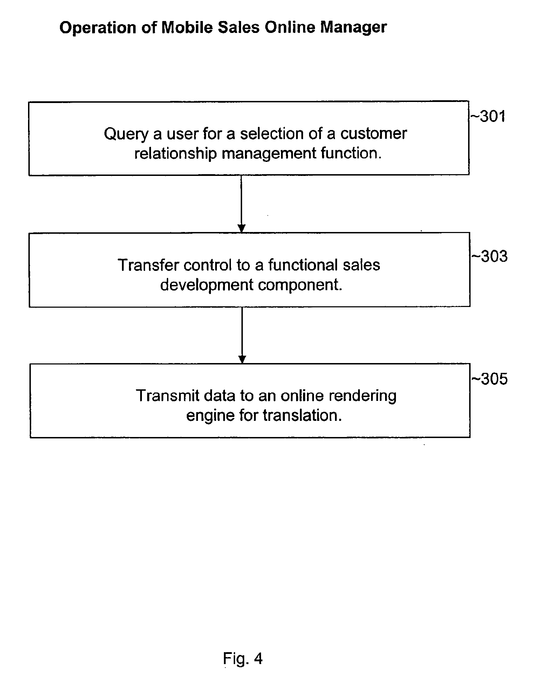

Figure 4 illustrates the operation of a mobile sales online manager according to one embodiment of the invention. In one embodiment of the invention mobile sales online manager resides on web application server 302.

In step 301, mobile sales online manager queries a user of a handheld device for a selection of a customer relationship management function. CRM functions may include marketing planning, campaign management, customer segmentation, other marketing analysis, sales planning and forecasting, sales organizational and territory management, account and contact management or other sales support or analysis. A user of a handheld device may respond to this query by selecting a function using handheld device 210. For example, if a user has had a sales meeting, the user may select a customer relationship function indicating that an activity has taken place. The selection may be transferred via Web Dynpro run-time engine 212 to Main DC 105 residing in sales business logic layer 204.

In step 303, mobile sales online manager 102 transfers control to a functional sales development component corresponding to the customer relationship management function selected by the user. Opportunity DC 108, Contract DC 110, Order DC 112, Account DC 114 and Activity DC 116 are exemplary functional sales development components. Control may be transferred to the functional sales development and its interface, as well as, for example, INavigable DC 109. In the example above, control may be transferred to Activity DC 116 and IActivity DC 126 to receive and process the user's input reflecting that a meeting took place. The functional sales development component may provide an output, such as querying the user to create a follow-up activity for the next appointment. The functional sales development component may retrieve user-specified configuration settings using Core DC 111 so that the output it provides is in accordance with the configurations set by the customer.

In step 305, the output of the functional sales development component is transmitted to online rendering engine 208 for translation to a format understood by the handheld device e.g., 210(1), used for the communication. This output may be transferred via Main DC 105. Main DC 105 may retrieve user-specified configuration settings using Core DC 111 and modify the output received from the functional sales component so that it is provided in accordance with the configurations set by the customer. Because output is transferred to online rendering engine 208, mobile sales online manager 102 may remain generic and operate with many types of handheld devices 210(1) - 210(A). Online rendering engine 208 may reside in web application server 302 or in memory of any other processing device. Online rendering engine 208 may receive a browser version, or other information identifying the type of handheld device 212. Online rendering engine 208 may translate the format using a look-up table that retrieves a format of a user interface specific to the type of handheld device 212 used.

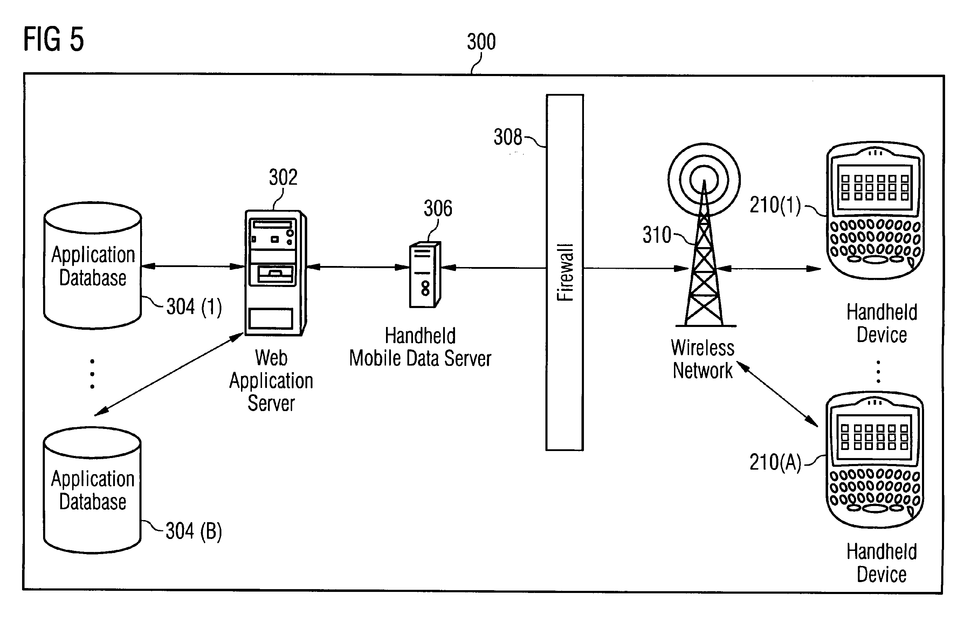

Figure 5 depicts web application server environment 300 according to one embodiment of the invention. Web application server environment 300 includes web application server 302, application databases 304 (1) - 304 (B), handheld mobile data server 306, firewall 308, wireless network 310, and handheld devices 210 (1) ― 210(A).

Web application server 302 may store and process mobile sales online manager 102, which resides in sales business logic layer 204.User interface layer 202 may also be stored and processed by web application server. Additionally, online rendering engine 208 and Web DynPro run-time engine 212 may also be stored and processed by web application server 302.

Web application server 302 interacts with application databases 204 (1) - 204 (B) to fetch and store data. Sales data layer 206 may be stored and processed by web application server 302 and/or application databases 204(1) - 204(B). Each application database 204 is a set of related data or files that make up software for a specific application, such as customer relationship management. Application database 204 can manage any form of data including text, images, sound and video. Web application server 102 runs processes related to a business application that operates on data resident in web application databases 204(1) - 204 (B) such as online applications relating to customer management. Online applications include applications that are available for immediate use, such as Internet applications or applications available via other remote services. In an alternate embodiment of the invention, applications reside on web application server 302 and there is no need for application databases 304(1) - 304(B).

Web application server 102 may communicate with handheld devices 210(1) - 210 (A) via handheld data server 306, firewall 308 and wireless network 310. Handheld data server 206 may be any processor system shared by handheld devices 210(1) - 210(A) for the purpose of facilitating access to web application server 302. In a embodiment of the invention, the handheld data server 306 is a Blackberry RIM Mobile Data Service.

Firewall 308 may be any computer that acts as an interface between the wireless network 310 and the web application server 302 to regulate data transmissions for the purpose of protecting web application server 302 from electronic attacks originating from wireless network 310. In alternate embodiments of the invention, web application server environment 300 does not comprise firewall 308. In those embodiments web application server 302 is connected directly to wireless network 310. In embodiments of the invention, firewall 308 may be constructed using one of a number of known firewall software applications running in a server. In alternate embodiments of the invention, firewall 308 may include a software application running on a server with other applications including applications carrying out some or all of the functionality described with respect to Figures 1 and 2.

Wireless network 310 is any arrangement of elements that use electromagnetic waves such as radio, cellular, infrared, or satellite transmission and may include any type of public or private wireless network.

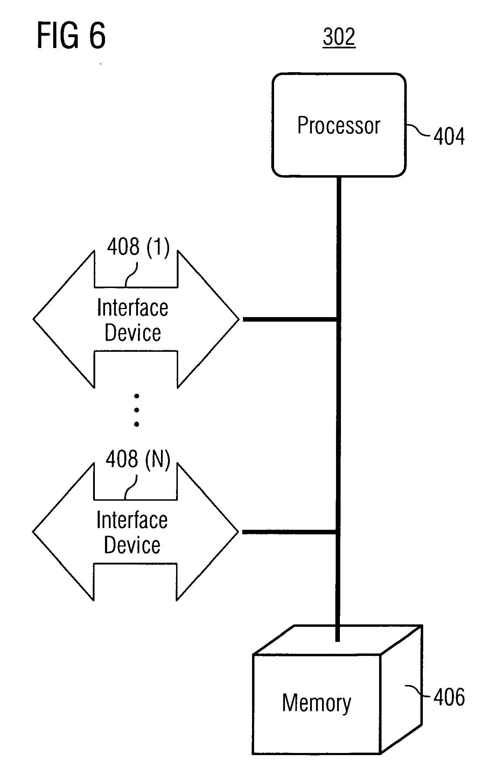

Figure 6 depicts a web application server 302 according to one embodiment of the invention. Web application server 302 is includes processor 404, memory 406, and interface devices 408 (1) - 408 (A). Processor 404 is connected to memory 406. Processor 404 is also connected to interface devices 408 (1) - 408(A). These connections are direct or via other internal electronic circuitry or components. Mobile sales online manager 102, user interface layer 202, sales data layer 206, online rendering engine 208, and Web DynPro run-time engine 212 may reside in memory 406 and be processed by processor 404.

Processor 404 may be any programmable processor that executes instructions residing in memory 406 to receive and send data via interface devices 408(1)-408(A). Processor 404 may be any programmable microprocessor or processor or combination of microprocessors or processors that can operate on digital data, which may be special or general purpose processors coupled to receive data and instructions from, and to transmit data and instructions to, a machine-readable medium. According to one embodiment of the present invention processor 404 is an Intel microprocessor.

Memory 406 may be any machine-readable medium that stores data that is processed by processor 404. Memory 406 may be any computer program product, apparatus and/or device (e.g., a random access memory (RAM), read only memory (ROM), magnetic disc, optical disc, programmable logic device (PLD), tape, or any combination of these devices). This may include external machine-readable mediums that are connected to processor 404 via one or more interface devices 408(1) - 408 (A).

Interface devices 408 (1) - 408 (A) may be any interfaces that receive and/or send digital data to and from an external device. Interfaces may be any point of access to an external device where digital data is received or sent, including ports, buffers, queues, subsets thereof, or any other interface to an external device.

Various implementations of the systems and techniques described here can be realized in any processing systems and/or digital electronic circuitry, integrated circuitry, specially designed ASICs (application specific integrated circuits), computer hardware, firmware, software, and/or combinations thereof. There various implementations can include computer code.

A number of embodiments of the invention have been described. Nevertheless, it will be understood that various modifications may be made without departing from the spirit and scope of the invention.

## Claims

1. A method for providing a user of a handheld device access to an online customer relationship management application comprising:
querying using a main development component said user of said handheld device for a selection of a customer relationship management function;
upon receipt of said selection, transferring control to a functional sales development component to provide said online customer relationship management function, wherein said functional sales development component is an opportunity development component, a contract development component, an order development component, an account development component, or an activity development component; and
sending said output to an online rendering engine to translate said output to a format understood by said handheld device, wherein said online rendering engine also translates output to other formats understood by other handheld devices.

2. The method of claim 1, further comprising:
retrieving customized configurations from a core development component to provide said output in accordance with a configuration of customer-specific settings.

3. The method of claim 1 or 2, wherein said control is transferred using a navigable interface development component.

4. The method of anyone of the preceding claims, wherein said at least one functional sales development component is an opportunity development component, a contract development component, an order development component, an account development component, and an activity development component.

5. The method of anyone of the preceding claims, wherein said at least one functional sales development component comprises a development component customized by said user.

6. The method of anyone of the preceding claims, further comprising generating a report for said user using a report development component.

7. The method of anyone of the preceding claims, wherein said at least one functional sales development component also comprises an interface development component.

8. A computer readable medium storing thereon program instructions that, when executed, cause an executing device to:
query using a main development component said user of said handheld device for a selection of a customer relationship management function;
upon receipt of said selection, transfer control to a functional sales development component to provide said online customer relationship management function, wherein said functional sales development component is an opportunity development component, a contract development component, an order development component, an account development component, or an activity development component; and
send said output to an online rendering engine to translate said output to a format understood by said handheld device, wherein said online rendering engine also translates output to other formats understood by other handheld devices.

9. The computer readable medium according to claim 8 further comprising instructions that cause the executing device to:
retrieve customized configurations from a core development component to provide said output in accordance with a configuration of customer-specific settings.

10. The computer readable medium according to claim 8 or 9, wherein said control is transferred using a navigable interface development component.

11. The computer readable medium according to anyone of claims 8 to 10, wherein said at least one functional sales development component is an opportunity development component, a contract development component, an order development component, an account development component, and an activity development component.

12. The computer readable medium according to anyone of claims 8 to 11, wherein said at least one functional sales development component comprises a development component customized by said user.

13. The computer readable medium according to anyone of claims 8 to 12, further comprising generating a report for said user using a report development component.

14. The computer readable medium according to anyone of claims 8 to 13, wherein said at least one functional sales development component also comprises an interface development component.

15. A system for providing a user of a handheld device with a customized display comprising:
a processor;
a memory coupled to said processor;
a mobile sales online manager residing in said memory and executed by said processor, said mobile sales online manager comprising:
a core component to retrieve a configuration of customer-specific settings stored in a configuration database;
a functional sales component and a functional sales interface component residing in a sales business logic layer to process business logic to provide a business logic output to be displayed in accordance with said configuration of customer-specific settings;
a user interface layer to provide a user interface to be displayed using said business logic output and said configuration of customer-specific settings; and
an online rendering engine to receive said user interface and translate said user interface so that it can be displayed by said handheld device, wherein said online rendering engine also translates output to other formats understood by other handheld devices.

16. The system of claim 15, wherein said functional sales component is an opportunity development component, a contract development component, an order development component, an account development component, or an activity development component.

17. The system of claim 15 or 16, further comprising:
a configuration database connected to said processor to download configurations set by an administrator; and
a configuration console to be used by an administrator for setting configurations.

18. The system of anyone of claims 15 to 17, wherein said functional sales component is an opportunity development component, a contract development component, an order development component, an account development component, and an activity development component.

19. The system of anyone of claims 15 to 18, wherein said mobile sales online manager further comprises a navigation component to transfer control.

20. The system of anyone of claims 15 to 19, wherein said mobile sales online manager further comprises a customer namespace to provide a user-customized functional sales component.
